# EUROPÄISCHE PATENTANMELDUNG

(11) **EP 3 587 336 A1**
(43) Veröffentlichungstag der Anmeldung: **01.01.2020**
(21) Anmeldenummer: 19167546.1
(22) Anmeldetag: 05.04.2019
(51) Int. Cl.: B66C 23/70, F16C 29/02

(54) **GLEITELEMENT MIT VERSCHLEISSZUSTANDSERKENNUNG**

(30) Priorität: 29.06.2018 DE 102018115872
(71) Anmelder: Liebherr-Werk Telfs GmbH, 6410 Telfs (AT)
(72) Erfinder: Nairz, Alwin, 6105 Leutasch (AT); Thaler, Christian, 6410 Telfs (AT)
(74) Vertreter: Laufhütte, Dieter

(57) **Zusammenfassung**

Die vorliegende Erfindung betrifft ein Gleitelement (10) für einen Teleskopausleger (1), welcher mindestens einen ein- und austeleskopierbaren Teleskopschuss (2) umfasst, wobei das Gleitelement eine Gleitfläche (12) zur Führung eines beweglichen Teleskopschusses, eine Montagefläche und eine Verschleißerkennungsvorrichtung zur Erkennung eines Verschleißzustandes des Gleitelements aufweist. Erfindungsgemäß ist die Verschleißerkennungsvorrichtung so ausgebildet, dass bei Erreichen eines Verschleißzustandes des Gleitelements eine optische Markierung des auf der Gleitfläche geführten Teleskopschusses stattfindet. Ferner betrifft die vorliegende Erfindung ein Gleitelement, wobei die Verschleißerkennungsvorrichtung ein Kontaktelement (26) aufweist, welches bei Erreichen eines Verschleißzustandes des Gleitelements den auf der Gleitfläche geführten Teleskopschuss kontaktiert, sowie einen Teleskopausleger mit einem erfindungsgemäßen Gleitelement und eine Arbeitsmaschine mit einem erfindungsgemäßen Teleskopausleger.

## Beschreibung

Die vorliegende Erfindung betrifft ein Gleitelement nach dem Oberbegriff des Anspruchs 1 sowie jeweils einen Teleskopausleger und eine Arbeitsmaschine mit mindestens einem solchen Gleitelement.

Gleitelemente für Teleskopausleger sind aus dem Stand der Technik bekannt. Dabei bilden üblicherweise mehrere Gleitelemente die Gleitlagerung der einzelnen ineinander verschiebbar gelagerten Teleskopschüsse. Häufig sind die Gleitelemente in den Endbereichen der einzelnen Teleskopschüsse montiert, so dass sie leichter von außen begutachtet und ausgewechselt werden können.

Durch die hohe mechanische Beanspruchung der Gleitelemente, auf denen die einzelnen Teleskopschüsse gleitend geführt werden, unterliegen diese einem erhöhten Verschleiß, was mit der Zeit zu einer Abtragung, d.h. einer Reduzierung der Höhe der Gleitelemente führt. Der Verschleiß wird häufig durch mangelnde oder mangelhafte Schmierung und/oder Wartung der Gleitelemente verstärkt.

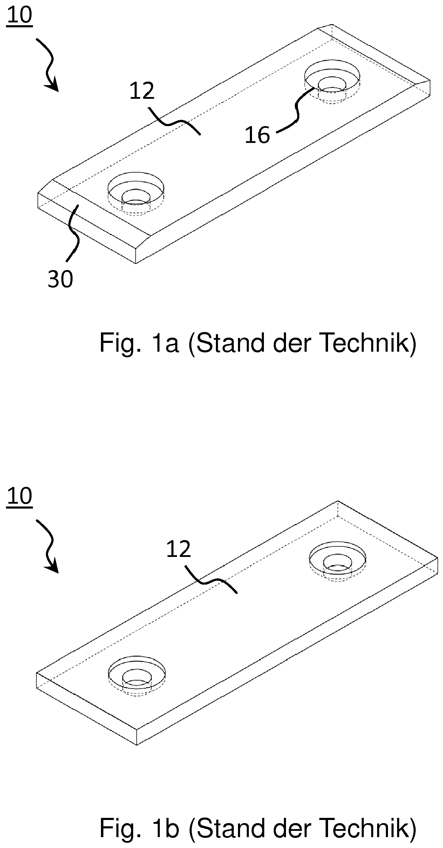

Um den aktuellen Verschleißzustand relativ zu einer bestimmten Verschleißgrenze, bis zu der Verschleiß maximal auftreten darf, visuell anzuzeigen bzw. einer optischen Kontrolle zugänglich zu machen, weisen Gleitelemente typischerweise Fasen an den Außenkanten auf. Dies ist exemplarisch in den Figuren 1a und 1b dargestellt, welche ein Gleitelement 10 gemäß dem Stand der Technik zeigen. Das Gleitelement 10 weist eine Gleitfläche 12 auf, auf welcher ein beweglicher Teleskopschuss (nicht dargestellt) geführt ist. Ferner sind zwei Montagebohrungen 16 vorgesehen, über welche das Gleitelement 10 an einem äußeren Teleskopschuss (nicht dargestellt) mittels Schrauben montierbar ist. Figur 1a zeigt das Gleitelement 10 in einem unverschleißten Zustand. Zu erkennen sind zwei Fasen 30, welche an den Querkanten der Gleitfläche 12 des Gleitelements 10 ausgebildet sind. Die Fasen 30 weisen eine Höhe auf, welche der Tiefe entspricht, bis zu der das Gleitelement 10 durch Verschleiß maximal abgetragen werden darf, bevor es ausgetauscht werden muss (Verschleißgrenze). Die Fasen 30 dienen also der optischen Kontrolle des aktuellen Verschleißes und fungieren als Verschleißmaß. Ist der Verschleiß so weit fortgeschritten, dass die Abtragung des Gleitelements 10 die Verschleißgrenze erreicht hat, so ist die Fase 30 vollständig verschwunden (Figur 1a). Dies ist der visuelle Indikator dafür, dass das Gleitelement 10 ausgetauscht werden muss.

Nachteilig an dieser Lösung ist jedoch, dass die Gleitelemente alle einzeln, in regelmäßigen Abständen und direkt aus der Nähe inspiziert werden müssen, um den Verschleiß zu überwachen und ggf. das Erreichen der Verschleißgrenze eines oder mehrerer Gleitelemente zu erkennen. Hierbei kann es leicht vorkommen, dass eine regelmäßige Kontrolle vergessen oder verzögert wird bzw. das Erreichen der Verschleißgrenze nicht rechtzeitig erkannt wird, was zu Beschädigungen der Teleskopschüsse oder zu Problemen beim Ein- und Ausfahren des Teleskopauslegers führen kann.

Vor diesem Hintergrund liegt der vorliegenden Erfindung die Aufgabe zugrunde, gattungsgemäße Gleitelemente für Teleskopausleger weiterzubilden und mit einer Vorrichtung auszustatten, welche eine rechtzeitige und eindeutige Erkennung des Erreichens der Verschleißgrenze ermöglicht.

Erfindungsgemäß wird diese Aufgabe durch ein Gleitelement mit den Merkmalen des Anspruchs 1 sowie ein Gleitelement mit den Merkmalen des Anspruchs 5 gelöst. Vorteilhafte Ausführungsformen der Erfindung ergeben sich aus den sich an die nebengeordneten unabhängigen Ansprüche anschließenden Unteransprüchen und der nachfolgenden Beschreibung.

Demnach ist ein Gleitelement für einen Teleskopausleger, welcher mindestens einen ein- und austeleskopierbaren Teleskopschuss umfasst, vorgesehen, wobei das Gleitelement eine Gleitfläche zur Führung eines beweglichen Teleskopschusses, eine Montagefläche und eine Verschleißerkennungsvorrichtung zur Erkennung eines Verschleißzustandes des Gleitelements aufweist. Erfindungsgemäß ist die Verschleißerkennungsvorrichtung so ausgebildet, dass bei Erreichen eines Verschleißzustandes des Gleitelements eine optische Markierung des auf der Gleitfläche geführten Teleskopschusses stattfindet. Die optische Markierung ist dabei insbesondere wieder von dem Teleskopschuss ablösbar bzw. entfernbar.

Durch die optische bzw. farbliche Markierung des Teleskopschusses, welches von dem auszutauschenden Gleitelement geführt wird, wird das Erreichen der Verschleißgrenze des besagten Gleitelements deutlich und von einer gewissen Entfernung sichtbar angezeigt. Eine regelmäßige Inspektion aller Gleitelemente aus nächster Nähe ist somit nicht mehr notwendig, was die Verschleißüberwachung einfacher und weniger fehleranfällig macht. Insbesondere ist die optische Markierung so ausgeführt, dass sie von der Fahrerkabine der Arbeitsmaschine aus deutlich zu erkennen ist. Dadurch erkennt der Fahrer sofort, falls eines der Gleitelemente die Verschleißgrenze erreicht hat und kann umgehend einen Austausch vornehmen oder veranlassen.

In einer Ausführungsform ist vorgesehen, dass die Verschleißerkennungsvorrichtung einen innerhalb des Gleitelements angeordneten Markierungskörper umfasst, welcher bei Kontakt mit dem auf der Gleitfläche geführten Teleskopschuss eine optische Markierung auf diesem erzeugt. Bei dem Markierungskörper handelt es sich dabei vorzugsweise um ein Material, welches einen Farbstoff enthält und welches bei Kontakt einen sichtbaren Film auf dem Teleskopschuss zurücklässt. Insbesondere handelt es sich bei dem Material um Fettölkreide mit einem Farbstoff, vorzugsweise in einer Signalfarbe.

Dies stellt eine besonders kostengünstige Ausführungsform der Verschleißerkennungsvorrichtung dar. Die Fettölkreidemarkierung lässt sich nach dem Austausch des Gleitelements wieder von dem Teleskopschuss entfernen, so dass beim nächsten Erreichen der Verschleißgrenze wieder eine optische Markierung bzw. Einfärbung erfolgen kann. Die Farbe der Fettkreide unterscheidet sich dabei vorzugsweise deutlich von der Farbe des eingefärbten Teleskopschusses (z.B. rot oder weiß).

In einer weiteren Ausführungsform ist vorgesehen, dass der Markierungskörper in einem gewissen Abstand von der Gleitfläche angeordnet ist, wobei der Abstand derjenigen Tiefe des Gleitelements entspricht, bis zu der das Gleitelement maximal durch Verschleiß abgetragen werden darf, bevor eine Markierung des Teleskopschusses erfolgt (Verschleißgrenze). Eine Markierung erfolgt also erst dann, wenn durch den Verschleiß die obere Schicht des Gleitelements zwischen Markierungskörper und Teleskopschuss freigelegt wurde und der Markierungskörper daraufhin in Kontakt mit dem Teleskopschuss kommt. Dies markiert das Erreichen der Verschleißgrenze.

Dabei kann vorgesehen sein, dass der Verschleiß des Gleitelements über die Verschleißgrenze hinaus für ein gewisses Maß erlaubt ist, so dass ein Austausch des Gleitelements nicht sofort zu erfolgen hat. Bei einem weiteren Verschleiß wird der Markierungskörper einfach mit dem Gleitelement zusammen abgetragen. Dadurch hat der Fahrer der Arbeitsmaschine noch etwas Zeit bis zum notwendigen Austausch des Gleitelements. Dies ist vorteilhaft, wenn beispielsweise zunächst Arbeiten fertig ausgeführt werden müssen oder gerade keine Ersatz-Gleitelemente vorrätig sind.

In einer weiteren Ausführungsform ist vorgesehen, dass der Markierungskörper in einer Bohrung, insbesondere Taschenfräsung, gelagert ist, welche entweder zur Gleitfläche oder zur Montagefläche hin offen ist. Ist die Bohrung zur Gleitfläche hin offen, so wird der Markierungskörper vom Boden der Bohrung bis zur Verschleißgrenze hin aufgefüllt bzw. eingebracht. Zwischen der Oberseite des Markierungskörpers und der Gleitfläche befindet sich dann entweder Luft, oder es kann ein Deckkörper oder Deckmaterial vorgesehen sein. Ist die Bohrung zur Montagefläche hin offen, so wird der Markierungskörper von der Montageseite aus eingefüllt bzw. eingebracht und nach der Montage des Gleitelements mit der Montageseite an einem äußeren Teleskopschuss von diesem abgedeckt bzw. eingeschlossen.

In einer weiteren Ausführungsform ist vorgesehen, dass das Gleitelement ferner eine Fase aufweist, welche sich entlang zumindest eines Teils der Außenkante der Gleitfläche erstreckt, wobei die Tiefe der Fase dem Abstand des Markierungskörpers von der Gleitfläche entspricht, so dass die Fase beim Erreichen der Verschleißgrenze gerade nicht mehr sichtbar ist. Dadurch ist neben der erfindungsgemäßen Anzeige des Erreichens der Verschleißgrenze durch die Markierung weiterhin eine individuelle optische Kontrolle des aktuellen Verschleißzustandes bzw. Verschleißmaßes des Gleitelements möglich. So kann jederzeit abgeschätzt werden, wie weit das Gleitelement aktuell verschleißt ist und wann voraussichtlich ein Austausch vorzunehmen sein wird.

Ebenso können mehrere Markierungskörper in unterschiedlichen Tiefen des Gleitelements vorgesehen sein, wobei vorzugsweise jeder Markierungskörper bei Erreichen der entsprechenden Verschleißtiefe eine Markierung mit einer unterschiedlichen Farbe vornimmt. Somit können mehrere Verschleißzustände optisch visualisiert werden und der Fahrer erhält eine abgestufte optische Kontrolle des aktuellen Verschleißzustandes.

Die vorliegende Erfindung umfasst weiterhin ein Gleitelement für einen Teleskopausleger, welcher mindestens einen ein- und austeleskopierbaren Teleskopschuss umfasst, mit einer Gleitfläche zur Führung eines beweglichen Teleskopschusses, mit einer Montagefläche, und mit einer Verschleißerkennungsvorrichtung zur Erkennung eines Verschleißzustandes des Gleitelements. Erfindungsgemäß umfasst die Verschleißerkennungsvorrichtung ein Kontaktelement, welches bei Erreichen eines Verschleißzustandes des Gleitelements den auf der Gleitfläche geführten Teleskopschuss kontaktiert.

Im Unterschied zu einer optischen bzw. farblichen Markierung des Teleskopauslegers wird hier das Erreichen der Verschleißgrenze durch einen Kontakt des Kontaktelements mit dem beweglichen Teleskopschuss detektiert. Bei dem Kontaktelement kann es sich beispielsweise um einen elektrischen Leiter (z.B. Draht oder Leiterbahn) oder ein elektronisches Bauteil handeln. Dadurch ist es möglich, dem Fahrer ein Warnsignal auszugeben, welches ein Erreichen der Verschleißgrenze des Gleitelements anzeigt. Auch hierbei kann es nicht mehr vorkommen, dass das Erreichen der Verschleißgrenze des Gleitelements unbemerkt bleibt und eine obligatorische regelmäßige visuelle Überprüfung kann unterbleiben.

In einer Ausführungsform ist vorgesehen, dass das Kontaktelement mit einer Spannungsquelle und/oder einer Auswertungseinheit und/oder einem Sensor verbunden ist und vorzugsweise so ausgelegt ist, dass ein optisches und/oder akustisches Signal erzeugt wird, sobald das Kontaktelement mit dem auf der Gleitfläche geführten Teleskopschuss in Kontakt kommt. Das Signal wird dabei vorteilhafterweise direkt in der Fahrerkabine oder am Fahrerstand ausgegeben.

In einer weiteren Ausführungsform ist vorgesehen, dass das Kontaktelement in einem gewissen Abstand von der Gleitfläche angeordnet ist, wobei der Abstand derjenigen Tiefe des Gleitelements entspricht, bis zu der das Gleitelement maximal durch Verschleiß abgetragen werden darf (Verschleißgrenze). Auch hier kann das Kontaktelement in einer Bohrung, insbesondere Taschenfräsung untergebracht sein, welche zur Gleitfläche oder zur Montagefläche hin offen ist.

In einer weiteren Ausführungsform ist vorgesehen, dass das Gleitelement ferner eine Fase aufweist, welche sich entlang zumindest eines Teils der Außenkante der Gleitfläche erstreckt, wobei die Tiefe der Fase dem Abstand des Kontaktkörpers von der Gleitfläche entspricht, so dass die Fase beim Erreichen der Verschleißgrenze gerade nicht mehr sichtbar ist. Dadurch ist neben der erfindungsgemäßen Anzeige des Erreichens der Verschleißgrenze weiterhin eine individuelle optische Kontrolle des aktuellen Verschleißzustandes bzw. Verschleißmaßes des Gleitelements möglich. So kann jederzeit abgeschätzt werden, wie weit das Gleitelement aktuell verschleißt ist und wann voraussichtlich ein Austausch vorzunehmen sein wird.

In einer weiteren Ausführungsform ist vorgesehen, dass das Gleitelement zwei Verschleißerkennungsvorrichtungen umfasst, wobei eine der Verschleißerkennungsvorrichtungen so ausgebildet, dass bei Erreichen eines Verschleißzustandes des Gleitelements eine optische Markierung des auf der Gleitfläche geführten Teleskopschusses stattfindet, und wobei die andere Verschleißerkennungsvorrichtung ein Kontaktelement umfasst, welches bei Erreichen eines Verschleißzustandes des Gleitelements den auf der Gleitfläche geführten Teleskopschuss kontaktiert. Die beiden Verschleißerkennungsvorrichtungen können dabei gemäß den oben beschriebenen Ausführungsformen ausgebildet sein.

Dabei weist vorzugsweise die optisch markierende Verschleißerkennungsvorrichtung einen Markierungskörper auf, welcher in einer geringeren Tiefe innerhalb des Gleitelements angeordnet ist als das Kontaktelement, d.h. einen geringeren Abstand zur Gleitfläche aufweist. Somit wird das Erreichen der Verschleißgrenze, bei welcher das Gleitelement ausgetauscht werden muss, durch Kontaktierung des Teleskopschusses mit dem Kontaktelement der einen Verschleißerkennungsvorrichtung angezeigt, während bereits zuvor, bei einem geringeren Verschleiß, eine optische Markierung des Teleskopschusses stattfindet. Die optische Markierung zeigt dann beispielsweise einen fortgeschrittenen Verschleiß an, bei welchem das Erreichen der Verschleißgrenze demnächst zu erwarten ist. Dadurch wird der Austausch der Gleitelemente des Teleskopauslegers planbarer. Darüber hinaus können auch mehrere Verschleißerkennungsvorrichtungen mit unterschiedlichen optischen Markierungen neben der Verschleißerkennungsvorrichtung mit dem Kontaktelement vorgesehen sein.

Die vorliegende Erfindung umfasst weiterhin einen Teleskopausleger mit mindestens einem ein- und austeleskopierbaren Teleskopschuss und mindestens einem erfindungsgemäßen Gleitelement sowie eine Arbeitsmaschine mit einem derartigen Teleskopausleger. Dabei ergeben sich offensichtlich dieselben Vorteile und Eigenschaften wie für das erfindungsgemäße Gleitelement, weshalb an dieser Stelle auf eine wiederholende Beschreibung verzichtet wird.

Weitere Merkmale, Einzelheiten und Vorteile der Erfindung ergeben sich aus den anhand der Figuren erläuterten Ausführungsbeispielen. Es zeigen:
- Figur 1a:: ein Gleitelement gemäß dem Stand der Technik in einem unverschleißten Zustand;
- Figur 1b:: das Gleitelement gemäß Figur 1a nach Erreichen der Verschleißgrenze;
- Figur 2a:: ein Ausführungsbeispiel des erfindungsgemäßen Gleitelements in einem unverschleißten Zustand;
- Figur 2b:: das Gleitelement gemäß Figur 2a nach Erreichen der Verschleißgrenze;
- Figur 3a:: ein weiteres Ausführungsbeispiel des erfindungsgemäßen Gleitelements in einem unverschleißten Zustand;
- Figur 3b:: das Gleitelement gemäß Figur 3a nach Erreichen der Verschleißgrenze;
- Figur 4a:: ein alternatives Ausführungsbeispiel des erfindungsgemäßen Gleitelements in einem unverschleißten Zustand;
- Figur 4b:: das Gleitelement gemäß Figur 4a nach Erreichen der Verschleißgrenze;
- Figur 5:: zwei Teleskopschüsse eines Teleskopauslegers mit mehreren erfindungsgemäßen Gleitelementen in einer schematischen perspektivischen Ansicht;
- Figur 6:: ein Ausschnitt des Kragens des äußeren Teleskopschusses gemäß Figur 5 und Durchschnitt durch eines der erfindungsgemäßen Gleitelemente vor Erreichen der Verschleißgrenze; und
- Figur 7:: der Ausschnitt gemäß Figur 6 nach Erreichen der Verschleißgrenze und nach erfolgter optischer Markierung des inneren Teleskopschusses;

Die Figuren 1a und 1b zeigen ein Gleitelement 10 gemäß dem Stand der Technik mit Fasen 30 an den Querkanten der Gleitfläche 12 als Verschleißmaß, wie bereits in der Beschreibungseinleitung beschrieben.

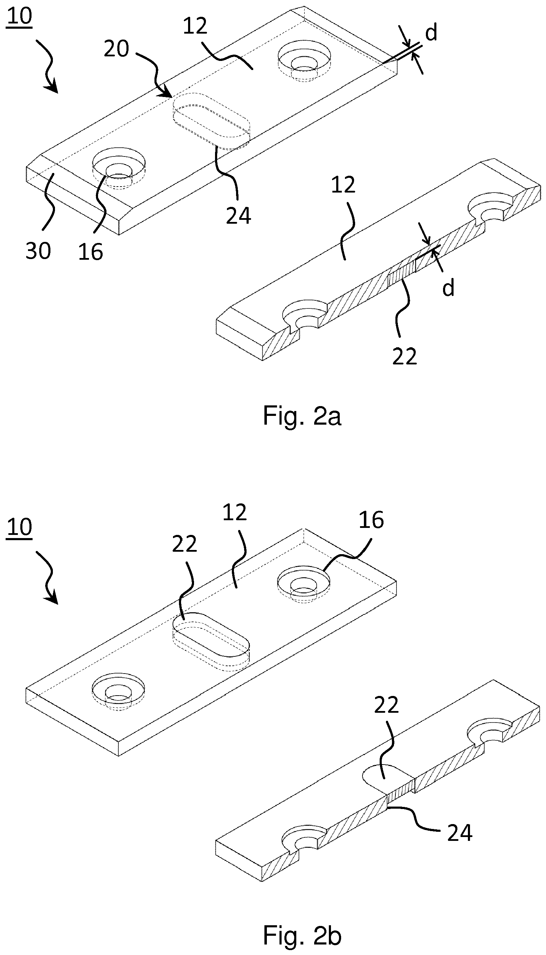

Die Figuren 2a und 2b zeigen ein Ausführungsbeispiel des erfindungsgemäßen Gleitelements 10 in einem unverschleißten Zustand (Figur 2a) und nach Erreichen der Verschleißgrenze (Figur 2b). Dabei stellen die rechten unteren Darstellungen jeweils Querschnitte in Längsrichtung des Gleitelements 10 durch die Verschleißerkennungsvorrichtung 20 dar.

Das Gleitelement 10 weist eine Gleitfläche 12 auf, über welche ein beweglicher Teleskopschuss 2 (nicht dargestellt) geführt ist. Ferner sind zwei Montagebohrungen 16 vorgesehen, über welche das Gleitelement 10 an einem äußeren Teleskopschuss 3 (nicht dargestellt) mittels Schrauben montierbar ist. Dabei liegt die Montagefläche 14 an dem äußeren Teleskopschuss an.

Das Gleitelement 10 weist mittig zwischen den Montagebohrungen 16 eine Verschleißerkennungsvorrichtung 20 in Form eines Markierungskörpers 22 auf, welcher in eine zur Montagefläche 14 hin offene Taschenfräsung 24 eingearbeitet ist. Bei dem Markierungskörper 22 handelt es sich um Fettölkreide mit einem Farbstoff in einer Signalfarbe, welche sich optisch gut von der Farbe des zu markierenden Teleskopschusses 2 absetzt. Die Fräsung 24 geht dabei nicht komplett durch das Gleitelement 10 hindurch, sondern endet in einem gewissen Abstand d zur Gleitfläche 12. Dieser Abstand d entspricht der Verschleißgrenze des Gleitelements 10.

Des Weiteren weist das Gleitelement 10 an den Querkanten der Gleitfläche 12 Fasen 30 auf, welche neben der Verschleißerkennungsvorrichtung 20 eine optische Kontrolle des Verschleißes erlauben. Dabei lässt sich der aktuelle Verschleißzustand während des Betriebs durch die verbleibende Höhe der Fase 30 (Verschleißmaß) ablesen und somit abschätzen, wie weit der Verschleiß bereits fortgeschritten ist und wann voraussichtlich mit dem Erreichen der Verschleißgrenze zu rechnen ist. Die Höhe der Fase 30 im unverschleißten Zustand entspricht dabei genau dem Abstand d zwischen Gleitfläche 12 und dem oberen Rand der Fettölkreide 22.

Wie der Figur 2b zu entnehmen ist, ist die Fase 30 bei Erreichen der Verschleißgrenze gerade nicht mehr zu erkennen. Gleichzeitig beginnt in diesem Stadium die optische Markierung des Teleskopschusses 2 durch die farbige Fettölkreide 22. Dabei wird der Teleskopschuss 2 beim Gleiten über das Gleitelement 10 durch den Kontakt mit der nun freiliegenden Fettölkreide 22 eingefärbt, so dass das Erreichen der Verschleißgrenze nun deutlich und insbesondere aus größerer Entfernung (beispielsweise von der Fahrerkabine oder dem Fahrerstand aus) sichtbar ist. Nun kann ein Austausch des entsprechenden Gleitelements 10 vorgenommen oder veranlasst werden.

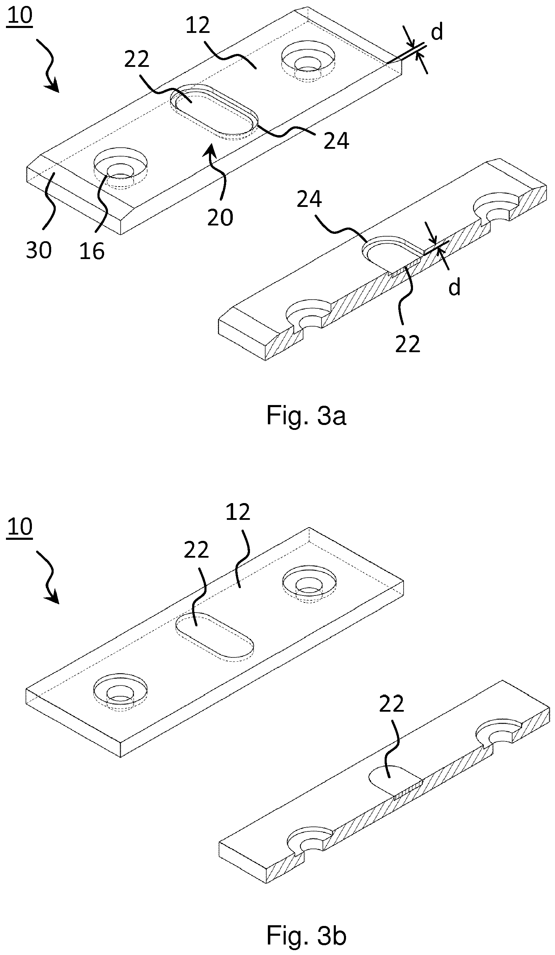

In den Figuren 3a und 3b ist eine weitere Ausführungsform des erfindungsgemäßen Gleitelements 10 gezeigt, abermals in einem unverschleißten Zustand (Figur 3a) und nach Erreichen der Verschleißgrenze (Figur 3b). Im Unterschied zu der Ausführungsform der Figuren 2a und 2b ist die Fräsung 24 hier zur Gleitfläche 12 hin offen und endet in einem gewissen Abstand zur Montagefläche 14. Die Fräsung 24 ist dabei nicht bis zum Rand mit der Fettölkreide 22 gefüllt, sondern die Fettölkreide 22 endet in einem Abstand d, welcher der Verschleißgrenze sowie der Tiefe der Fase 30 entspricht, zur Gleitfläche 12. Somit ergeben sich die gleichen Eigenschaften wie in dem vorherigen Ausführungsbeispiel.

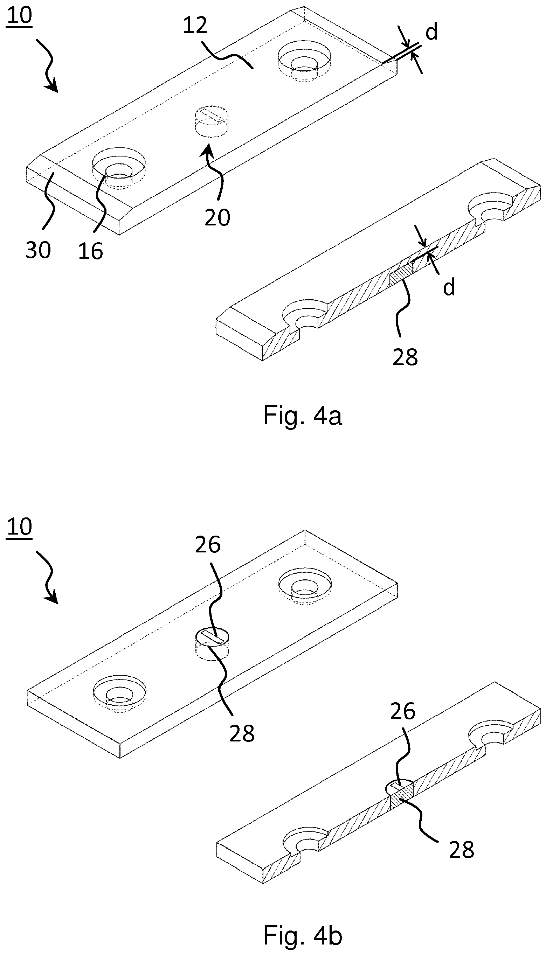

In den Figuren 4a und 4b ist ein alternatives Ausführungsbeispiel des erfindungsgemäßen Gleitelements 10 dargestellt, wobei die Verschleißerkennungsvorrichtung 20 anstelle des Markierungskörpers 22 ein Kontaktelement 26 umfasst, welches bei einem Kontakt mit dem über das Gleitelement 10 geführten Teleskopschuss 2 das Aussenden eines optischen und/oder akustischen Signals in der Fahrerkabine oder am Fahrerstand der den Teleskopausleger 1 umfassenden Arbeitsmaschine auslöst.

Bei dem Kontaktelement 26 handelt es sich um einen Elektrodenkontakt 26, welcher an einem Sensor 28 angebracht ist. Im unverschleißten Zustand (Figur 4a) befindet sich das Kontaktelement 26 in einem Abstand d zu der Gleitfläche 12 des Gleitelements, welcher der Verschleißgrenze sowie der Tiefe der Fase 30 entspricht. Sobald durch Verschleiß das Gleitelement 10 um eine Dicke d in der Höhe reduziert wurde und somit die Verschleißgrenze erreicht ist, ist die Fase 30 nicht mehr zu erkennen und das Kontaktelement 26 ist freigelegt (Figur 4b). Durch den nun erfolgenden Kontakt mit dem Teleskopschuss 2 wird das Signal ausgegeben. Nun kann ein Austausch des entsprechenden Gleitelements 10 veranlasst werden.

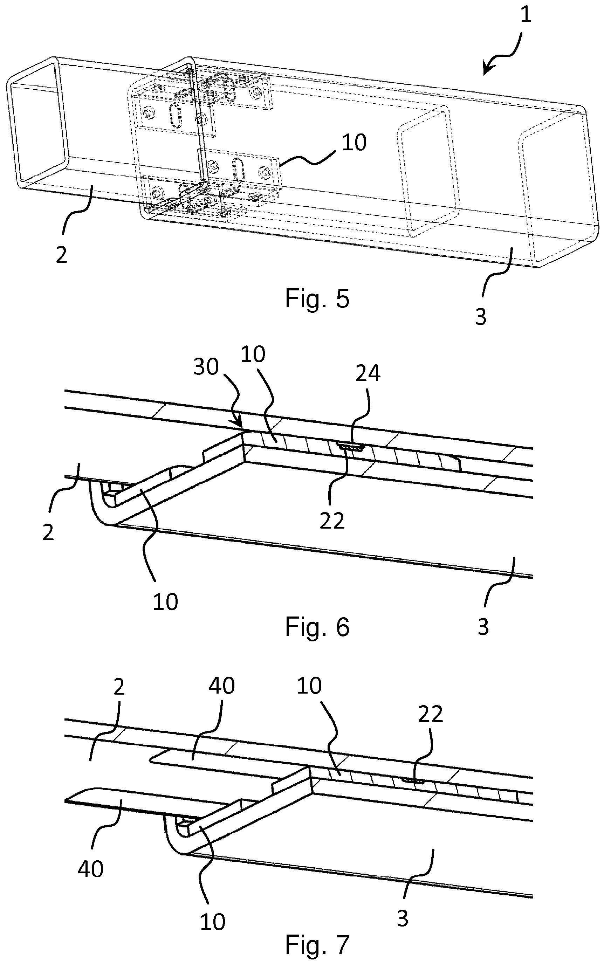

In der Figur 5 ist ein Ausschnitt eines Teleskopauslegers 1 dargestellt, bei dem zwei ineinander und relativ zueinander beweglich gelagerte Teleskopschüsse 2, 3 gezeigt sind. Dabei ist der innere Teleskopschuss 2 relativ zu dem äußeren Teleskopschuss 3 ein- und ausfahrbar. Zur Lagerung und Führung des inneren Teleskopschusses 2 sind an dem Kragen des äußeren Teleskopschusses 3 mehrere erfindungsgemäße Gleitelemente 10 angeordnet, deren Gleitflächen 12 zum inneren Teleskopschuss 2 weisen.

Die Figuren 6 und 7 zeigen einen Ausschnitt des Kragenbereichs des äußeren Teleskopschusses 3 in einer Querschnittsansicht durch die beiden Teleskopschüsse 2, 3 und durch eines der Gleitelemente 10, wobei sich das Gleitelement 10 in Figur 6 in einem Zustand vor und in Figur 7 in einem Zustand nach Erreichen der Verschleißgrenze befindet. In diesem Ausführungsbeispiel ist die Verschleißerkennungsvorrichtung 20 als in einer zur Gleitfläche 12 hin offenen Taschenfräsung 24 gelagerte Fettölkreide 22 ausgestaltet.

Vor Erreichen der Verschleißgrenze (Figur 6) ist von außen ein verbleibender Teil der Fase 30 zu erkennen, welcher als Verschleißmaß dient und den aktuellen Verschleißzustand anzeigt. Oberhalb des oberen Randes der in das Gleitelement 10 eingebetteten Fettölkreide 22 befindet sich ein Luftspalt, so dass diese mit dem Teleskopschuss 2 nicht in Berührung kommt und keine Markierung stattfindet.

Bei Erreichen der Verschleißgrenze (Figur 7) ist das Gleitelement 10 so weit abgetragen, dass die Fettölkreide 22 nun mit dem Teleskopschuss 2 in Berührung kommt und diesen bei einer Relativbewegung farblich markiert. In der Figur 7 sind zwei Farbmarkierungen 40 an dem inneren Teleskopschuss 2 zu erkennen, welche nach außen hin deutlich anzeigen, dass die beiden entsprechenden Gleitelemente 10 ihre Verschleißgrenze erreicht haben und daher ausgewechselt werden müssen.

### Bezugszeichenliste:

- 1: Teleskopausleger
- 2: Innerer Teleskopschuss
- 3: Äußerer Teleskopschuss
- 10: Gleitelement
- 12: Gleitfläche
- 14: Montagefläche
- 16: Montagebohrung
- 20: Verschleißerkennungsvorrichtung
- 22: Markierungskörper
- 24: Bohrung
- 26: Kontaktelement
- 28: Sensor
- 30: Fase
- 40: Markierung
- d: Abstand zwischen Gleitfläche und Verschleißgrenze

## Patentansprüche

1. Gleitelement (10) für einen Teleskopausleger (1), welcher mindestens einen ein- und austeleskopierbaren Teleskopschuss (2) umfasst, mit einer Gleitfläche (12) zur Führung eines beweglichen Teleskopschusses (2), mit einer Montagefläche (14), und mit einer Verschleißerkennungsvorrichtung (20) zur Erkennung eines Verschleißzustandes des Gleitelements (10),
**dadurch gekennzeichnet,**
**dass** die Verschleißerkennungsvorrichtung (20) so ausgebildet ist, dass bei Erreichen eines Verschleißzustandes des Gleitelements (10) eine optische Markierung des auf der Gleitfläche (12) geführten Teleskopschusses (2) stattfindet.

2. Gleitelement (10) nach Anspruch 1, **dadurch gekennzeichnet, dass** die Verschleißerkennungsvorrichtung (20) einen innerhalb des Gleitelements (10) angeordneten Markierungskörper (22) umfasst, welcher bei Kontakt mit dem auf der Gleitfläche (12) geführten Teleskopschuss (2) eine optische Markierung (40) auf diesem erzeugt, wobei es sich bei dem Markierungskörper (22) vorzugsweise um ein Material, insbesondere Fettölkreide, handelt, welches einen Farbstoff enthält und welches bei Kontakt einen sichtbaren Film (40) auf dem Teleskopschuss (2) zurücklässt.

3. Gleitelement (10) nach Anspruch 2, **dadurch gekennzeichnet, dass** der Markierungskörper (22) in einem gewissen Abstand (d) von der Gleitfläche (12) angeordnet ist, wobei der Abstand (d) derjenigen Tiefe des Gleitelements (10) entspricht, bis zu der das Gleitelement (10) maximal durch Verschleiß abgetragen werden darf, bevor eine Markierung des Teleskopschusses (2) erfolgt (Verschleißgrenze).

4. Gleitelement (10) nach Anspruch 2 oder 3, **dadurch gekennzeichnet, dass** der Markierungskörper (22) in einer Bohrung (24), insbesondere Taschenfräsung, gelagert ist, welche entweder zur Gleitfläche (12) oder zur Montagefläche (14) hin offen ist.

5. Gleitelement (10) für einen Teleskopausleger (1), welcher mindestens einen ein- und austeleskopierbaren Teleskopschuss (2) umfasst, mit einer Gleitfläche (12) zur Führung eines beweglichen Teleskopschusses (2), mit einer Montagefläche (14), und mit einer Verschleißerkennungsvorrichtung (20) zur Erkennung eines Verschleißzustandes des Gleitelements (10),
**dadurch gekennzeichnet,**
**dass** die Verschleißerkennungsvorrichtung (20) ein Kontaktelement (26) umfasst, welches bei Erreichen eines Verschleißzustandes des Gleitelements (10) den auf der Gleitfläche (12) geführten Teleskopschuss (2) kontaktiert.

6. Gleitelement (10) nach Anspruch 5, **dadurch gekennzeichnet, dass** das Kontaktelement (26) mit einer Spannungsquelle und/oder einer Auswertungseinheit und/oder einem Sensor (28) verbunden ist und vorzugsweise so ausgelegt ist, dass ein optisches und/oder akustisches Signal erzeugt wird, sobald das Kontaktelement (26) mit dem auf der Gleitfläche (12) geführten Teleskopschuss (4) in Kontakt kommt.

7. Gleitelement (10) nach einem der Ansprüche 5 oder 6, **dadurch gekennzeichnet, dass** das Kontaktelement (26) in einem gewissen Abstand (d) von der Gleitfläche (12) angeordnet ist, wobei der Abstand (d) derjenigen Tiefe des Gleitelements (10) entspricht, bis zu der das Gleitelement (10) maximal durch Verschleiß abgetragen werden darf (Verschleißgrenze).

8. Gleitelement (10) nach einem der Ansprüche 3 oder 7, **dadurch gekennzeichnet, dass** das Gleitelement (10) ferner eine Fase (30) aufweist, welche sich entlang zumindest eines Teils der Außenkante der Gleitfläche (12) erstreckt, wobei die Tiefe der Fase (30) dem Abstand (d) entspricht, so dass die Fase (30) beim Erreichen der Verschleißgrenze gerade nicht mehr sichtbar ist.

9. Gleitelement (10) nach einem der Ansprüche 1 bis 4, **dadurch gekennzeichnet, dass** es zusätzlich mit den Merkmalen nach einem der Ansprüche 5 bis 8 ausgebildet ist.

10. Teleskopausleger (1) mit mindestens einem ein- und austeleskopierbaren Teleskopschuss (2) und mit mindestens einem Gleitelement (10) nach einem der vorhergehenden Ansprüche.

11. Arbeitsmaschine mit einem Teleskopausleger (1) nach Anspruch 10.
